# EUROPÄISCHE PATENTSCHRIFT

(11) **EP 2 791 052 B1**
(45) Veröffentlichungstag und Bekanntmachung des Hinweises auf die Patenterteilung: **31.10.2018**
(21) Anmeldenummer: 12829174.7
(22) Anmeldetag: 12.12.2012
(51) Int. Cl.: C01B 3/38, B01J 8/06

(54) **TRANSPORTABLER REFORMER**
TRANSPORTABLE REFORMER
REFORMEUR TRANSPORTABLE

(30) Priorität: 14.12.2011 DE 102011120938
(43) Veröffentlichungstag der Anmeldung: 22.10.2014
(73) Patentinhaber: thyssenkrupp Industrial Solutions AG, 45143 Essen (DE)
(72) Erfinder: MEIßNER, Oliver, 45966 Gladbeck (DE); BEYER, Falk, 21465 Reinbek (DE)
(74) Vertreter: thyssenkrupp Intellectual Property GmbH
(86) Internationale Anmeldenummer: PCT/EP2012/005118
(87) Internationale Veröffentlichungsnummer: WO 2013/087194

(56) Entgegenhaltungen:
- EP-A1- 1 329 256
- EP-A1- 1 783 425
- WO-A2-2010/149361
- DE-A1- 1 767 980
- DE-A1- 10 333 854
- GB-A- 1 196 654

## Beschreibung

Die vorliegende Erfindung betrifft einen transportablen Reformer zur katalytischen Reformierung von Kohlenwasserstoff mit Wasserdampf unter erhöhtem Druck, mit dem Synthesegas hergestellt wird. Derartiges Synthesegas dient beispielsweise zur Herstellung von Ammoniak, Wasserstoff und Methanol, wobei der Reformer so konstruiert ist, dass dieser transportabel ist.

Reaktoren zur katalytischen Reformierung von Kohlenwasserstoffen mit Wasserdampf sind seit langem und in einer Vielzahl von Ausführungsformen bekannt. Bei Großanlagen hat sich eine Bauart durchgesetzt, bei der ein deckengefeuerter Kastenofen mit senkrecht stehenden Reaktionsrohren bzw. Spaltrohren zum Einsatz kommt. Hierbei sind die Spaltrohre in Reihen angeordnet. Der Einsatzstoff durchströmt die mit Katalysatoren gefüllten Spaltrohre von oben nach unten und wird dabei einem sogenannten Spaltprozess unterzogen.

Die Gasaustrittstemperaturen liegen üblicherweise bei 850 °C und darüber. Das aus den Spaltrohren austretende Prozessgas wird inner- oder außerhalb des befeuerten Teils des Ofens - in Sammelleitungen zusammengeführt. In den zwischen den Rohrreihen liegenden "Gassen" sind senkrecht nach unten feuernde Brenner angeordnet. Der gefeuerte Bereich des gesamten Reformers wird auch als Ofenbox bezeichnet. Die Temperaturen in der Ofenbox liegen im Durchschnitt bei 1000 bis 1250 °C. Die Ofenwände sind zur Wärmeisolierung und zum Schutz vor den durch die Beheizung vorherrschenden hohen Temperaturen mit einer feuerfesten Schutzschicht ausgekleidet.

Der Ofenraum, in dem die Befeuerungsvorrichtungen angeordnet sind, besitzt im unteren Bereich des Raumes eine Vielzahl von im Wesentlichen waagerecht angeordneten, parallel zueinander und rechtwinklig zu den vertikalen Rohren verlaufenden Tunneln aus Mauerwerk zum Sammeln der Rauchgase. Das erzeugte Rauchgas durchströmt die Ofenbox von oben nach unten und wird durch diese am Boden liegenden Rauchgastunnel, die an den Seiten Öffnungen aufweisen, abgezogen.

DE 103 33 854 A1 offenbart einen Röhrenspaltofen zur katalytischen Reformierung von Kohlenwasserstoffen mit Wasserdampf unter erhöhtem Druck, aufweisend ein Spaltrohrsystem und einen Befeuerungsraum, dabei das Spaltrohrsystem als Reaktionsraum, umfassend eine Vielzahl von vertikalen Rohren, welche in Reihen angeordnet und zum Füllen mit Katalysator geeignet sind und Einrichtungen zum Zuführen von zu reformierenden Kohlenwasserstoffen und Wasserdampf zum Reaktionsraum sowie Einrichtungen zum Abführen reformierten Synthesegases aus dem Reaktionsraum besitzen. Im oberen Bereich des Befeuerungsraums weist der Reformer eine Vielzahl von Befeuerungseinrichtungen auf und im unteren Bereich des Befeuerungsraumes befinden sich eine Vielzahl von waagerecht angeordneten, parallel zueinander und senkrecht zu den vertikalen Rohren verlaufender Tunnel zum Abzug der Rauchgase durch Öffnungen in den Seitenwänden der Tunnel. Die Sammelleitungen zum Abführen refomierten Synthesegases liegen ausserhalb des Reaktionsraums.

DE 1 767 980 offenbart ein Rohrofen zum Reformieren in Anwesenheit von Katalysatoren, mit lotrecht angeordneten, elastisch am oberen Ende aufgehängten, aus einzelnen Rohren bestehenden, mit ihren unteren Enden direkt am Hilfssammelrohr angeschlossenen Rohrschichten und oberen parallel zu den Rohrschichten nach unten gerichteten Brennern, wobei die Hilfssammelrohre als Abstützung für die Rohre auf der Sohle des Ofens ruhen und jedes Hilfssammelrohr außerhalb des Ofens über einen seitlichen Ausgang an ein Sammelrohr angeschlossen ist, das auf einer quer zu ihm gleitend verschieblichen Abstützung ruht und mit einer durch eine elastische Aufhängung gehaltenen Abfuhr- oder Überführungsleitung verbunden ist. Dabei entsprechen die Hilfssammelrohre den Sammelleitungen in der vorliegenden Erfindung. Allerdings sind die Hilfssammelrohre innerhalb des Ofens auf dessen Sohle angeordnet. Die Abgaskanäle - Rauchgastunnel entsprechend - sind teilweise innerhalb des Ofens und teilweise unterhalb des Ofens angeordnet.

Eine Bauart des Reformers ist beispielsweise in WO 2010/149361 A2 ausführlich beschrieben. Im Wesentlichen umfasst ein Reformer ein Zuführsystem für die zur Reformierung bestimmten Einsatzstoffe, ein Spaltrohr- und Austrittskollektorsystem und einen Befeuerungsraum mit für die Befeuerung nötigen Ausrüstungen. Im Hinblick auf der sogenannten "Kastenform" des Reformers werden getrennte Fundamentauflagerungen für den Befeuerungsraum und die Sammelleitungen und Spaltrohre benötigt. Daher ist der Reformer so nicht transportabel, da ohne bestimmte Maßnahmen die Sammelleitungen zum Beispiel keine feste Verbindung zum Befeuerungsraum haben. Darüber hinaus wären für die innerhalb des Befeuerungsraumes freistehend gemauerten Rauchgastunnel umfangreiche Transportsicherungen erforderlich.

Aufgrund der Größe des Reformers wird er bisher direkt an seinem Einsatzort aus vorgefertigten Einzelteilen aufgebaut. Diese Montage ist zeitintensiv und erfordert erhebliche Mengen an Arbeitskräften und Arbeitsmitteln. An einigen Einsatzorten führt Mangel an fachkundigen Arbeitskräften nicht selten zur verzögerten Fertigstellung der Anlage.

Der Erfindung liegt daher das Problem zugrunde, einen transportablen Reformer zur Verfügung zu stellen, der mit überschaubarer Anzahl von Teilen des Reformers zum Bestimmungsort oder Betriebsort transportiert wird, dort einfach zu einem fertigen Reformer montiert werden kann, oder sogar als ein bereits fertig montierter Reformer vom Aufbauort oder Montageort zum Bestimmungsort transportiert wird.

Die Aufgabe wird gelöst durch einen transportablen Reformer zur katalytischen Primärreformierung von Kohlenwasserstoffen mit Wasserdampf unter erhöhtem Druck, wobei der transportable Reformer ein Spaltrohrsystem und einen Befeuerungsraum aufweist,
- wobei das Spaltrohrsystem als Reaktionsraum eine Vielzahl von vertikalen Rohren, welche in Reihen angeordnet und zum Füllen mit Katalysator geeignet sind und Einrichtungen zum Zuführen von zu reformierenden Kohlenwasserstoffen und Wasserdampf zum Reaktionsraum umfasst, und
- im oberen Bereich des Befeuerungsraums eine Vielzahl von parallel zueinander angeordneten Befeuerungseinrichtungen umfasst,
wobei
die parallel zueinander angeordneten Befeuerungseinrichtungen jeweils zwischen den Spaltrohren angeordnet sind und aus einer Vielzahl in Reihe angeordneter Brenner bestehen, und
die Brenner im Wesentlichen abwärts gerichtete Flammen erzeugen können,
welche geeignet sind, die Spaltrohre zu beheizen,
- sowie Sammelleitungen zum Abführen reformierten Synthesegases aus dem Reaktionsraum, und die Sammelleitungen außerhalb des Reaktionsraums liegen, und
- Rauchgastunnel zum Abführen des durch die im Befeuerungsraum entstandene Rauchgases, wobei
- eine Vielzahl von waagrecht, parallel zueinander angeordneten Rauchgastunneln unterhalb des Befeuerungsraum angeordnet sind, wobei die Rauchgastunnel jeweils zwischen den Sammelleitungen angeordnet sind,
- wobei die Rauchgastunnel und der Befeuerungsraum fest miteinander verbunden, und die Sammelleitungen derart mit den Rauchgastunnel verbunden sind, dass sie mit dem Rest des Reformers im Verbund sind, so dass der fertig montierte Reformer als transportabler Reformer ausgeführt ist.

Beim bisherigen Stand der Technik sind die Rauchgastunnel im Inneren des Reaktionsraums unten angeordnet, um die im Befeuerungsraum entstandene Rauchgase abzuführen. Die erfindungsgemäßen Rauchgastunnel sind außerhalb des Reaktionsraums, waagrecht, parallel zueinander und unterhalb des Reaktionsraums, jeweils zwischen den Sammelleitungen angeordnet. Aufgrund der Anordnung der Rauchgastunnel außerhalb des Reaktionsraums können die Rauchgastunnel mit den Sammelleitungen, Reaktionsraum sowie Außengehäuse ein fest verbundenes System bilden, so dass ein nach diesem System aufgebauter Reformer transportfähig wird.

Der Reformer kann so weit fertig montiert werden, dass er nur noch vom Montageort zum Bestimmungsort transportiert, und auf einen vorbereiteten festen Boden oder Betonstützen befestigt wird.

Wunschgemäß kann der Reformer auch aus einer überschaubaren Anzahl von zusammenhängenden Teilen in modularer Weise ausgebildet werden, wobei die zusammenhängende Teile so vorgefertigt sind, dass sie am Montageort zusammenmontiert werden können, oder so dass die Module der zusammenhängenden Teilen vom Montageort zum Bestimmungsort transportiert und am Bestimmungsort zusammenmontiert werden. Beispielsweise kann der Reformer im Wesentlichen aus einem zusammenhängenden oberen und einem zusammenhängenden unteren Teil bestehen, wobei der obere Teil im wesentlich ein Zuführsystem, Spaltrohrsystem und einen Befeuerungsraum umfasst, und sich im unteren Teil die Rauchgastunneln und Sammelleitungen befinden.

Infolge der erfindungsgemäßen Anordnung der Rauchgastunnel können die Rauchgastunnel verschiedene Formen annehmen, so dass die Rauchgastunnel im Querschnitt eine U-Form, V-Form oder Trapez-Form aufweisen.

Der Rauchgastunnel ist so angeordnet, dass die Öffnungen nach oben gerichtet sind, damit das im Reaktionsraum entstandene Rauchgas in den Rauchgastunnel strömen kann, wobei die Öffnung mit Rauchgaszugang versehenem Deckstein zugedeckt ist.

Es handelt sich bei dem Rauchgaszugang der Decksteine zum Rauchgastunnel um Formen von Schlitzen, Löchern, Drallkörpern oder Lücken zwischen den Decksteinen.

Damit das heiße Rauchgas durch den Rauchgastunnel strömen kann, verfügt der Rauchgastunnel über eine Innen- und eine Außenwand, wobei die Innenwand des Rauchgastunnels aus feuerfester Auskleidung und die Außenwand des Rauchgastunnels aus Stahl besteht und die Innenwand und Außenwand miteinander fest verankert sind.

Hierbei wird meistens die Außenwand aus Stahl hergestellt, die feuerfeste Auskleidung der Innenwand kann beispielsweise mit Steinen, Beton, Fasern oder anderen feuerfesten Materialien gestaltet werden. Natürlich müssen die Innenwand und die Außenwand so miteinander verbunden werden, dass sie an sich schon transportfähig sind. Damit der Reformer als Ganze transportabel wird, sind die Rauchgastunnel zum Beispiel mit dem Boden des Befeuerungsraums verbunden und die Sammelleitungen wiederum mit den Rauchgastunnel oder dem Boden des Befeuerungsraums verbunden.

Unterhalb der Sammelleitung sind Fixiervorrichtung sowie Unterstützung in vordefinierten Abständen über die gesamte Länge zum Stützen der Sammelleitung vorgesehen. Diese Fixvorrichtung und Unterstützung können durch verschiedene Ausführungsformen gestaltet werden.

Dabei ist die Fixiervorrichtung oder Unterstützung der Sammelleitung auf einem Träger, der je zwei Rauchgastunnel an den Außenwänden verbindet, angeordnet ist, so dass die Lasten des Spaltrohrsystems in die Außenwände der Rauchgastunnel eingeleitet werden.

Die Unterstützung der Sammelleitung kann so angeordnet sein, dass sie senkrecht auf einem Träger angeordnet ist, wobei der Träger waagerecht je zwei Rauchgastunnel an den Außenwänden verbindet, so dass die Lasten des Spaltrohrsystems in die Außenwände der Rauchgastunnel eingeleitet werden. Dadurch ist zunächst das Spaltrohrsystem fest mit der Ofenbox verbunden. Die Anordnung der Unterstützung auf dem Träger kann so gestaltet werden, dass sie die Form eines gleichschenkligen Trapezes aufweist, denn mit dieser Variante wird eine gleichwertige Stabilität sowie Lasten Verteilung auch erreicht.

Die obige Befestigung der Sammelleitung mit dem restlichen Teil des Reformers stellt nur eine Variante dar. Die Fixiervorrichtung oder Unterstützung der Sammelleitung kann auch anders gestaltet werden, so dass der gleiche Effekt erzielt wird. Beispielsweise kann die Sammelleitung auch durch eine Hängerkonstruktion am Boden der Ofenbox befestigt werden.

Dadurch, dass der fertig aufgebaute Reformer am Bestimmungsort auf einem vorbereiteter Stelle, meistens mit festen stabilen Betonstützen, befestigt wird, ist ein bestimmter Abstand zwischen dem Boden und der Sammelleitung vorgegeben. Dies führt auch dazu, dass die Sammelleitung auf natürliche Weise gekühlt wird. Um diese Abkühlen der Sammelleitung auf jeden Fall zu gewährleisten, ist ein Warmluftkamin vorgesehen, so dass ein Ende jedes Zwischenraumes zwischen zwei Rauchgastunneln mit einem separaten oder gemeinsamen Warmluftkamin verbunden ist, mittels dessen Naturzuges eine stete Frischluftzufuhr in den Zwischenräumen garantiert ist.

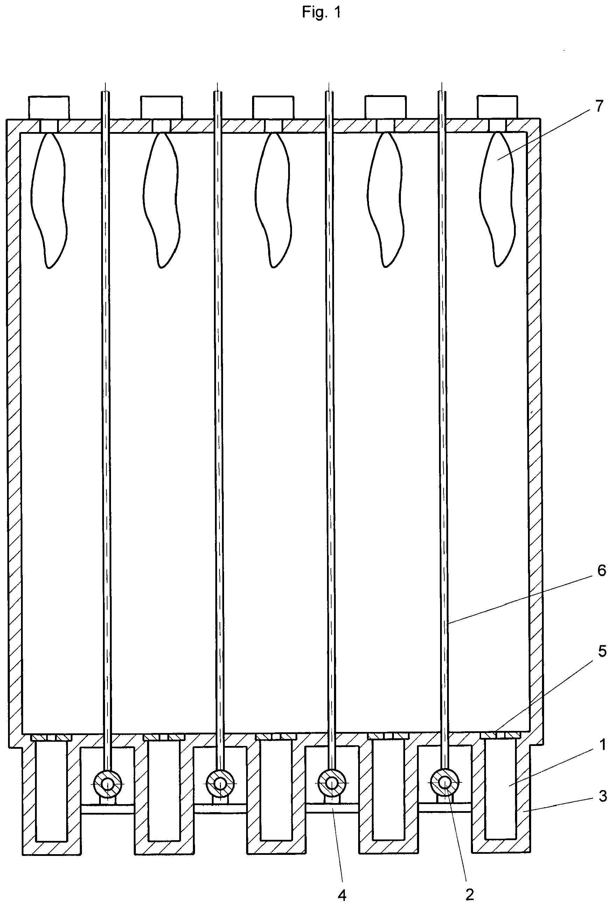

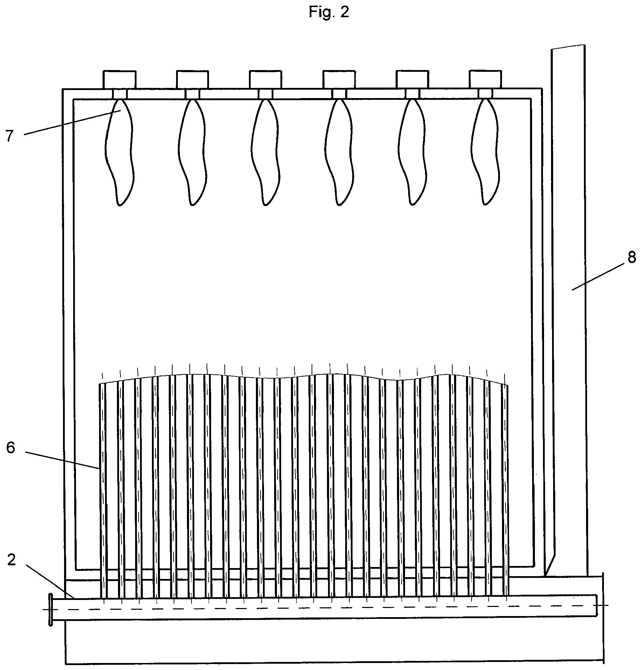

Die Figur 1 und Figur 2 veranschaulichen die erfindungsgemäße Konstruktion des Rauchgastunnels und der Sammelleitung des transportablen Reformers.

Der fertig gebaute Reformer ist als Ganzes transportabel. Der im Wesentlichen Spaltrohrsystem und Befeuerungseinrichtungen umfassende Reaktionsraum ist hier nur vereinfacht dargestellt.

Die Fig. 1 zeigt eine Vielzahl von waagrecht, parallel zueinander und unterhalb des Befeuerungsraums angeordneten Rauchgastunneln (1) und Sammelleitungen (2), wobei die Rauchgastunnel (1) jeweils zwischen den Sammelleitungen (2) angeordnet sind. Die Tiefe des Rauchgastunnels kann zwischen 2m und 3m, vorzugweise 2,5m liegen, die Breite des Rauchgastunnels beträgt zwischen 0,5m bis 0,8m, und die feuerfeste Auskleidung (3) des Rauchgastunnels (1) liegt ca. 0,2m bis 0,35m. Der Durchmesser der Sammelleitung (2) samt der feuerfesten Auskleidung liegt zwischen 0,5m bis 0,66m.

Die Fig. 2 zeigt außer der Befeuerungsvorrichtung (7), Prozessgasrohren (6) und Sammelleitung (2) noch ein Warmluftkamin (8), damit eine stete Frischluftzufuhr zwischen den Sammelleitungen garantiert wird.

### Bezugszeichenliste:

- 1: Rauchgastunnel
- 2: Sammelleitung
- 3: Feuerfeste Auskleidung
- 4: Träger
- 5: Deckstein
- 6: Prozessgasrohr
- 7: Befeuerungsvorrichtung
- 8: Warmluftkamin

## Patentansprüche

1. Transportabler Reformer zur katalytischen Primärreformierung von Kohlenwasserstoffen mit Wasserdampf unter erhöhtem Druck, aufweisend ein Spaltrohrsystem und einen Befeuerungsraum,
- wobei das Spaltrohrsystem als Reaktionsraum eine Vielzahl von vertikalen Rohren (6), welche in Reihen angeordnet und zum Füllen mit Katalysator geeignet sind und Einrichtungen zum Zuführen von zu reformierenden Kohlenwasserstoffen und Wasserdampf zum Reaktionsraum umfasst, und
- im oberen Bereich des Befeuerungsraums eine Vielzahl von parallel zueinander angeordneten Befeuerungseinrichtungen (7) umfasst,
wobei
die parallel zueinander angeordneten Befeuerungseinrichtungen (7) jeweils zwischen den Spaltrohren (6) angeordnet sind und aus einer Vielzahl in Reihe angeordneter Brenner bestehen, und
die Brenner im Wesentlichen abwärts gerichtete Flammen erzeugen können, welche geeignet sind, die Spaltrohre (6) zu beheizen,
- sowie Sammelleitungen (2) zum Abführen reformierten Synthesegases aus dem Reaktionsraum, und die Sammelleitungen (2) ausserhalb des Reaktionsraums liegen, und
- Rauchgastunneln (1) zum Abführen des durch die im Befeuerungsraum entstandene Rauchgases,
wobei
- eine Vielzahl von waagrecht, parallel zueinander angeordneten Rauchgastunneln (1) vorgesehen sind
- und wobei die Rauchgastunnel (1) und der Befeuerungsraum fest miteinander verbunden sind, **dadurch gekennzeichnet, dass** die Rauchgastunnel (1) unterhalb des Befeuerungsraums angeordnet sind, wobei die Rauchgastunnel (1) jeweils zwischen den Sammelleitungen (2) angeordnet sind
und die Sammelleitungen (2) derart mit den Rauchgastunneln (1) verbunden sind, dass sie mit dem Rest des Reformers im Verbund sind, so dass der fertig montierte Reformer als transportabler Reformer ausgeführt ist.

2. Transportabler Reformer nach Anspruch 1 , **dadurch gekennzeichnet, dass** der Reformer aus einer überschaubaren Anzahl von zusammenhängenden Teile in modularer Weise ausgebildet wird.

3. Transportabler Reformer nach Anspruch 1 oder 2, **dadurch gekennzeichnet, dass** die zusammenhängenden Teile so vorgefertigt sind, dass sie am Montageort zusammenmontiert werden können.

4. Transportabler Reformer nach Anspruch 1 , **dadurch gekennzeichnet, dass** die Rauchgastunnel im Querschnitt eine U-Form aufweisen.

5. Transportabler Reformer nach Anspruch 1 , **dadurch gekennzeichnet, dass** die Rauchgastunnel im Querschnitt eine V-Form aufweisen.

6. Transportabler Reformer nach Anspruch 1 , **dadurch gekennzeichnet, dass** die Rauchgastunnel im Querschnitt eine Trapez-Form aufweisen.

7. Transportabler Reformer nach Anspruch 1 , **dadurch gekennzeichnet, dass** der Rauchgastunnel mit Öffnung nach oben angeordnet ist, wobei die Öffnung mit Rauchgaszugang versehenem Deckstein zugedeckt ist.

8. Transportabler Reformer nach Anspruch 1 , **dadurch gekennzeichnet, dass** es sich bei dem Rauchgaszugang der Decksteine zum Rauchgastunnel um Formen von Schlitzen, Löchern, Drallkörpern oder Lücke zwischen der Decksteine handelt.

9. Transportabler Reformer nach Anspruch 1 , **dadurch gekennzeichnet, dass** die Innenwand des Rauchgastunnels aus feuerfester Auskleidung und die Aussenwand des Rauchgastunnels aus Stahl besteht und die Innenwand und Aussenwand miteinander fest verankert sind.

10. Transportabler Reformer nach Anspruch 1 , **dadurch gekennzeichnet, dass** die Rauchgastunnel mit dem Boden des Befeuerungsraums verbunden sind.

11. Transportabler Reformer nach Anspruch 1 , **dadurch gekennzeichnet, dass** unterhalb der Sammelleitung Fixiervorrichtung sowie Unterstützung in vordefinierten Abständen über die gesamte Länge zum Stützen der Sammelleitung vorgesehen sind.

12. Transportabler Reformer nach Anspruch 11, **dadurch gekennzeichnet, dass** die Fixiervorrichtung oder Unterstützung der Sammelleitung auf einem Träger, der je zwei Rauchgastunnel an den Aussenwänden verbindet, angeordnet ist, so dass die Lasten des Spaltrohrsystems in die Aussenwände der Rauchgastunnel eingeleitet werden.

13. Transportabler Reformer nach Anspruch 1 , **dadurch gekennzeichnet, dass** ein Ende jedes Zwischenraumes zwischen zwei Rauchgastunneln mit einem separaten oder gemeinsamen Warmluftkamin verbunden ist, mittels dessen Naturzuges eine stete Frischluftzufuhr in den Zwischenräumen garantiert ist.

## Claims

1. Transportable reformer for the catalytic primary reforming of hydrocarbons using steam at elevated pressure, comprising a cracking tube system and a firing chamber,
- wherein the cracking tube system comprises, as a reaction chamber, a multiplicity of vertical tubes (6), which are arranged in rows and are suitable for being filled with a catalyst, and devices for feeding hydrocarbons to be reformed and steam to the reaction chamber, and
- comprises, in the upper region of the firing chamber, a multiplicity of firing devices (7) which are arranged parallel to one another,
wherein
the firing devices (7) arranged parallel to one another are arranged in each case between the cracking tubes (6) and consist of a multiplicity of burners arranged in a row, and
the burners are able to produce substantially downwardly directed flames which are suitable for heating the cracking tubes (6),
- and collecting lines (2) for discharging reformed synthesis gas from the reaction chamber, the collecting lines (2) being situated outside the reaction chamber, and
- flue gas tunnels (1) for discharging the flue gas formed by the in the firing chamber, wherein
- a multiplicity of horizontal flue gas tunnels (1) which are arranged parallel to one another are provided,
- and wherein the flue gas tunnels (1) and the firing chamber are connected fixedly to one another, **characterized in that** the flue gas tunnels (1) are arranged below the firing chamber, wherein the flue gas tunnels (1) are arranged in each case between the collecting lines (2),
and the collecting lines (2) are connected to the flue gas tunnels (1) such that they are in connection with the remainder of the reformer, with the result that the fully assembled reformer is designed as a transportable reformer.

2. Transportable reformer according to Claim 1, **characterized in that** the reformer is formed from a manageable number of linked parts in a modular manner.

3. Transportable reformer according to Claim 1 or 2, **characterized in that** the linked parts are prefabricated such that they are able to be assembled at the assembly location.

4. Transportable reformer according to Claim 1, **characterized in that** the flue gas tunnels are U-shaped in cross section.

5. Transportable reformer according to Claim 1, **characterized in that** the flue gas tunnels are V-shaped in cross section.

6. Transportable reformer according to Claim 1, **characterized in that** the flue gas tunnels are trapeziform in cross section.

7. Transportable reformer according to Claim 1, **characterized in that** the flue gas tunnel is arranged with its opening upwards, wherein the opening is covered by a covering slab provided with a flue gas inlet.

8. Transportable reformer according to Claim 1, **characterized in that** the flue gas inlets of the covering slabs to the flue gas tunnels are formed as slots, holes, swirl plates or gaps between the covering slabs.

9. Transportable reformer according to Claim 1, **characterized in that** the inner wall of the flue gas tunnel consists of a refractory lining, and the outer wall of the flue gas tunnel consists of steel, and the inner wall and outer wall are firmly anchored to one another.

10. Transportable reformer according to Claim 1, **characterized in that** the flue gas tunnels are connected to the base of the firing chamber.

11. Transportable reformer according to Claim 1, **characterized in that**, below the collecting line, a fixing device and support are provided at predefined intervals over the entire length for the purpose of supporting the collecting line.

12. Transportable reformer according to Claim 11, **characterized in that** the fixing device or support of the collecting line is arranged on a mount, which connects in each case two flue gas tunnels at the outer walls, with the result that the loads of the cracking tube system are introduced into the outer walls of the flue gas tunnels.

13. Transportable reformer according to Claim 1, **characterized in that** one end of each intermediate space between two flue gas tunnels is connected to a separate or common warm-air chimney, the natural draught of which guarantees a constant supply of fresh air in the intermediate spaces.

## Revendications

1. Reformeur transportable pour le reformage catalytique primaire d'hydrocarbures avec de la vapeur d'eau sous haute pression, comportant un système de tubes de craquage et une chambre de chauffe,
- dans lequel le système tubes de craquage comprend, en tant que chambre de réaction, une pluralité de tubes verticaux (6) qui sont disposés en rangées et sont aptes à être remplis de catalyseur, et des dispositifs servant à acheminer les hydrocarbures à reformer et de la vapeur d'eau à la chambre de réaction, et
- dans la région supérieure de la chambre de chauffe, comprend une pluralité de dispositifs de chauffe (7) disposés parallèlement les uns aux autres,
dans lequel
les dispositifs de chauffe (7) disposés parallèlement les uns aux autres sont respectivement disposés entre les tubes de craquage (6) et sont constitués d'une pluralité de brûleurs disposés en rangées, et
les brûleurs peuvent produire des flammes dirigées sensiblement vers le bas qui sont appropriées pour chauffer les tubes de craquage (6),
- ainsi que des conduites collectrices (2) servant à évacuer le gaz de synthèse reformé de la chambre de réaction, les conduites collectrices (2) se trouvant à l'extérieur de la chambre de réaction, et
- des tunnels de gaz de fumée (1) destinés à évacuer le gaz de fumée qui s'est formé dans la chambre de chauffe, dans lequel
- il est prévu une pluralité de tunnels de gaz de fumée (1) disposés horizontalement et parallèlement les uns aux autres,
- et dans lequel les tunnels de gaz de fumée (1) et la chambre de chauffe sont reliés rigidement entre eux, **caractérisé en ce que** les tunnels de gaz de fumée (1) sont disposés au-dessous la chambre de chauffe, dans lequel les tunnels de gaz de fumée (1) sont respectivement disposés entre les conduites collectrices (2)
et les conduites collectrices (2) sont reliées aux tunnels de gaz de fumée (1) de telle sorte qu'elles sont reliées au reste du reformeur et que le reformeur entièrement monté est réalisé sous la forme d'un reformeur transportable.

2. Reformeur transportable selon la revendication 1, **caractérisé en ce que** le reformeur est réalisé de manière modulaire à partir d'un nombre raisonnable d'éléments associés.

3. Reformeur transportable selon la revendication 1 ou 2, **caractérisé en ce que** les éléments associés sont préfabriqués de telle sorte qu'ils peuvent être montés ensemble sur le lieu d'installation.

4. Reformeur transportable selon la revendication 1, **caractérisé en ce que** les tunnels de gaz de fumée présentent une section transversale en forme de U.

5. Reformeur transportable selon la revendication 1, **caractérisé en ce que** les tunnels de gaz de fumée présentent une section transversale en forme de V.

6. Reformeur transportable selon la revendication 1, **caractérisé en ce que** les tunnels de gaz de fumée présentent une section transversale trapézoïdale.

7. Reformeur transportable selon la revendication 1, **caractérisé en ce que** le tunnel de gaz de fumée est disposé avec son ouverture vers le haut, dans lequel l'ouverture est recouverte d'une dalle de recouvrement pourvue d'un accès aux gaz de fumée.

8. Reformeur transportable selon la revendication 1, **caractérisé en ce que** l'accès aux gaz de fumée des dalles de recouvrement donnant sur le tunnel de gaz de fumée peut présenter la forme de fentes, de trous, de corps en spirales ou d'espaces entre les dalles de recouvrement.

9. Reformeur transportable selon la revendication 1, **caractérisé en ce que** la paroi intérieure du tunnel de gaz de fumée est constituée d'un revêtement réfractaire, **en ce que** la paroi extérieure du tunnel de gaz de fumée est constituée d'acier et **en ce que** la paroi intérieure et la paroi extérieure sont rigidement ancrées l'une à l'autre.

10. Reformeur transportable selon la revendication 1, **caractérisé en ce que** les tunnels de gaz de fumée sont reliés au sol de la chambre de chauffe.

11. Reformeur transportable selon la revendication 1, **caractérisé en ce qu'**un dispositif de fixation et un élément de support sont prévus sous la conduite collectrice à des intervalles prédéfinis sur toute la longueur pour supporter la conduite collectrice.

12. Reformeur transportable selon la revendication 11, **caractérisé en ce que** le dispositif de fixation ou l'élément de support de la conduite collectrice est disposé sur un support qui relie deux tunnels de gaz de fumée sur chacune des parois extérieures, de sorte que les charges du système de tubes de craquage sont introduites dans les parois extérieures des tunnels de gaz de fumée.

13. reformeur transportable selon la revendication 1, **caractérisé en ce qu'**une extrémité de chaque espace entre deux tunnels de gaz de fumée est reliée à une cheminée d'air chaud séparée ou commune, au moyen de laquelle le tirage naturel garantit un apport constant d'air frais dans les espaces intermédiaires.
